# EUROPEAN PATENT APPLICATION

(11) **EP 4 542 218 A1**
(43) Date of publication of application: **23.04.2025**
(21) Application number: 24207304.7
(22) Date of filing: 17.10.2024
(51) Int. Cl.: G01N 29/14, G01N 29/24, G01N 21/84, A01C 1/02, G01H 9/00

(54) **METHOD AND SYSTEM FOR MONITORING DISCRETE ACOUSTIC EVENTS, IN PARTICULAR SEED GERMINATION**

(30) Priority: 18.10.2023 NL 1044716
(71) Applicant: PhotonFirst IP B.V., 1812 SC Alkmaar (NL)
(72) Inventor: HAVERDINGS, Michael Benjamin, 1812 SC Alkmaar (NL); LANGEDIJK, Gideon, 1812 SC Alkmaar (NL)
(74) Representative: Algemeen Octrooi- en Merkenbureau B.V.

(57) **Abstract**

A method for monitoring discrete acoustic events is proposed; the method comprising:
- arranging at least one optical waveguide in a vicinity of a mechanical process understood to produce a discrete acoustic sound;
- optically coupling the at least one optical waveguide to at least one optical interrogator;
- sensing the at least one optical waveguide using the at least one optical interrogator to detect when a discrete acoustic event is produced; and
- if it is detected that a discrete acoustic event is produced, notifying a monitoring system of the discrete acoustic event.

## Description

### TECHNICAL FIELD

The present disclosure generally relates to monitoring discrete acoustic events, in particular seed germination. Particular embodiments relate to a method and a system for monitoring discrete acoustic events, as well as a corresponding computer program and apparatus.

### BACKGROUND

Some important qualities of plant seeds are size, weight, colour and germination speed. A batch of plant seeds will react to moisture over time and germinate. For a farmer, it is important to know the speed at which these seeds germinate, as well as having a small time window in which the first 5% and last 5% of the seeds germinate. This is a quality indicator from a seed supplier as this will allow the farmer to plant a higher density of crops. Seeds that go into the seedling and plant stages faster than their neighbours can block out sunlight, water and nutrition leading to a lower density of crops.

The seed germination speed is an important test that the farmer can do himself, to test if it is suitable for planting. If the seed is stored improperly or if there has not been enough time since harvesting of the plant seeds, they might be unsuitable for planting. Farmers can also adjust their planting rate based on the germination rate of the specific seed batch.

Seed suppliers blend and control the quality of their product which they sell typically in large batches.

In order to perform a test, samples are gathered of a specific seed batch of between 50 and 200 seeds. These are placed in a controlled germination environment (e.g. a germination tray made of plastic, or glass, or any other suitable material) in temperature and light. Then, over a timeframe of up to 2 weeks (depending on the type of seed) the seeds are counted a few times, e.g. 2-5 times, in terms of the number of germinated seeds. The rate of germination is an indicator of vigour. Rapid seed germination increases the chance of the seed establishing in the field. Germination rate is the average number of seeds that germinate over the 5- and 10-day periods.

Many of these tests are performed. There are also more in-depth tests that record more quality based such as seed size, weight colour etc. However most of the tests are focused on germination speed.

The detection (and therefore counting) of germinated seeds is conventionally performed manually, meaning that an operator has to visually inspect the seeds and then determine germination. This is a tedious task, and is performed daily over all the germination test units. Manual inspection and counting may be prone to human errors, labour intensive, and data may be gathered during working hours only.

Computer vision-based systems (like cameras or LIDAR) struggle with accuracy: how to actually determine a germinated seed? And what if a seed sprouts in a direction away from the visual inspection (so-called "invisible sprouting")? Or quickly sprouting seeds can cross over each other, preventing direct computer visual recognition.

The state of the art thus consists of very labour intensive visual inspection and analysis, that is prone to errors and leads to relatively low quality of data.

Seed suppliers would therefore benefit from improving this process for reasons of cost, but also for improved data quality, as, currently, during weekends and outside office hours, no counting takes place.

### SUMMARY

It is therefore desired to provide a solution that registers the timing and frequency of seed germination automatically, by monitoring (a batch of) seeds in germination test conditions, in order to determine and count the germination of individual seeds.

It is an insight of the inventors that optical technology can provide such a solution, and it is a further insight of the inventors that the same technology can provide a solution for different problems, outside of the application domain of counting seed germination.

The measurement concept is based on the premise of "listening to the germination of seeds". This relates to the concept that the seeds make a soft acoustic 'pop' when the exterior shell breaks due the germination of the seed. By recording the audible acoustic emission produced by this 'pop' the germination can be detected and therefore counted.

Accordingly, there is provided in a first aspect according to the present disclosure, a method according to claim 1, for monitoring discrete acoustic events; the method comprising:
- arranging at least one optical waveguide in a vicinity of a mechanical process understood to produce a discrete acoustic sound;
- optically coupling the at least one optical waveguide to at least one optical interrogator;
- sensing the at least one optical waveguide using the at least one optical interrogator to detect when a discrete acoustic event is produced; and
- if it is detected that a discrete acoustic event is produced, notifying a monitoring system of the discrete acoustic event.

Examples of such discrete acoustic events may include, but are not limited to, any of e.g. seed germination; precipitation falling (i.e. pluviometry) in the form of water drops and/or hail stones; granulate matter such as sand, grain or sugar hitting an object such as a container wall or a funnel wall etc.; ...

Advantageously, it is implicit that the optical waveguide(s) is/are impervious to water/moisture. This has the advantage that the sensing setup can survive a long time in wet environments, e.g. in pluviometry or in seed germination trays.

In various embodiments, the at least one optical interrogator comprises:
- an interferometry interrogator, preferably a Mach-Zehnder interferometer, MZI;
- a Fiber Bragg Grating, FBG, strain measurement interrogator; and/or
- an Optical Time Domain Reflectometry, OTDR, interrogator.

The MZI may have two paths with similar optical path length. The light traveling through it ends up in a certain phase. In the end, the phase shifts of these two paths are combined and compared with respect to each other, allowing to measure the slightest phase change of either of these paths.

The discrete acoustic events may distort the phase in one path (by design, as this is related to the layout of the waveguide into the vicinity of the mechanical process, e.g. in the germination environment), which results in a phase shift in the output measurement.

In theory, if the exact same phase shift in one path happens in the other path as well, both paths register the same phase shift, and the result will show no difference in phase. This is, however, statistically extremely unlikely.

In various embodiments, the method comprises:
- arranging a first splitter-coupler at one end of the or each optical waveguide and a second splitter-coupler at another end of the or each optical waveguide;
- optically coupling the or each first splitter-coupler with a light source; and
- optically coupling the or each second splitter-coupler with a photodetector.

For example a Multimode Interference, MMI, splitter-coupler, or a Fused Biconical Taper.

The above-described MZI works for any given wavelength. There is however a certain coherence required in order to determine the interference effect. Any given light source must conform to the coherence requirements in order to do phase measurements. For example, a laser function may function for this. When the MZI path difference is close to 0, lower coherence sources could be used. At some point, these low-coherent sources may no longer be called lasers. And of course, other structures could be defined to demultiplex certain light sources such that in the end the coherence requirement is met.

In various embodiments, the method comprises:
- arranging an acoustic-optic transducer configured for transducing an acoustic signal into an optical signal, preferably by converting the acoustic signal into a mechanical signal and subsequently converting the mechanical signal into the optical signal.

In various embodiments, the at least one optical waveguide is arranged in a square spiral pattern, a round spiral pattern, or a serpentine pattern; or wherein the at least one optical waveguide is arranged in an intersecting pattern adapted to allow sensing over the entire vicinity of the mechanical process.

In various embodiments, said vicinity is characterized by a distance of at most 20 mm, preferably at most 15 mm, more preferably at most 10 mm, measured from a location where the mechanical process occurs or is expected to occur to a closest section of the at least one optical waveguide.

In various embodiments, the method comprises counting each detected discrete acoustic event.

In various embodiments, the method is suitable for monitoring germination of seeds; the method comprising:
- obtaining at least one seed arranged in an environment for germination;
- arranging the at least one optical waveguide in a vicinity of the at least one seed;
- optically coupling the at least one optical waveguide to at least one optical interrogator;
- sensing the at least one optical waveguide using the at least one optical interrogator to detect a discrete acoustic event when at least one shell of the at least one seed ruptures; and
- if it is detected that the at least one shell of the at least seed has ruptured and has produced a discrete acoustic event, notifying the monitoring system of germination of the at least one seed.

An example of a discrete acoustic event is the germination of plant seeds. A seed will in the presence of the correct conditions sprout, breaking its skin, shell or shell. This acoustic event can be detected by the system.

In various embodiments, the environment for germination comprises a germination tray, and wherein the at least one optical waveguide is produced in a bottom of the germination tray by etching and/or lasering.

In various embodiments, the environment for germination comprises a germination tray, and wherein the at least one optical waveguide comprises an optical fiber attached on an inner surface of the germination tray, the inner surface being arranged to support the at least one seed.

Preferably, the inner surface is also arranged to support a germination matrix, e.g. soil.

In various further developed embodiments, the at least one optical fiber is attached on the inner surface of the germination tray by gluing, moulding, clamping and/or taping.

In various embodiments, said vicinity is characterized by a distance of at most 20 mm, preferably at most 15 mm, more preferably at most 10 mm, measured from a seed of the at least one seed to a closest section of the at least one optical waveguide.

In various embodiments, the method comprises:
- arranging an acoustic insulation to acoustically shield the environment for germination from an outside environment.

In various embodiments, the method comprises:
- analysing the discrete acoustic event produced by the at least one shell of the at least seed rupturing, in order to classify said discrete acoustic event into one of said different types of plant seeds.

The analysis and classification may be performed using e.g. an artificial intelligence model trained to classify different popping sounds into different types of plant seeds. Alternatively (or even additionally), other types of automated analysis may be used, e.g. Principal Component Analysis (PCA), by having training sets and an identification set to probabilistically determine the percentage match for seed popping in general, or specifically trained for a certain seed type.

Accordingly, there is provided in a second aspect according to the present disclosure, a computer program according to claim 15, comprising instructions which, when the computer program is executed by a computer, cause the computer to carry out at least one of the steps of the method of any preceding claim.

Of course, the skilled person will be able to adjudicate which particular steps are to be carried out by the computer (e.g. detection, notification, analysis, etc.), and which other steps are to be entrusted to a human operator or to a robot (e.g. arranging and coupling waveguides).

Accordingly, there is provided in a third aspect according to the present disclosure, a computer apparatus according to claim 16, comprising at least one processor and a memory storing the computer program.

Accordingly, there is provided in a fourth aspect according to the present disclosure, a system according to claim 17, for monitoring discrete acoustic events; the system comprising:
- at least one optical waveguide arranged in a vicinity of a mechanical process understood to produce a discrete acoustic sound;
- at least one optical interrogator optically coupled to the at least one optical waveguide;
wherein the at least one optical interrogator is configured for sensing the at least one optical waveguide, to detect when a discrete acoustic event is produced; and wherein the at least one optical interrogator is configured for, if it is detected that a discrete acoustic event is produced, notifying a monitoring system of the discrete acoustic event.

In various embodiments, the at least one optical interrogator comprises:
- an interferometry interrogator, preferably a Mach-Zehnder interferometer, MZI;
- a Fiber Bragg Grating, FBG, strain measurement interrogator; and/or
- an Optical Time Domain Reflectometry, OTDR, interrogator.

In various embodiments, the system comprises:
- a first splitter-coupler arranged at one end of the or each optical waveguide;
- a second splitter-coupler arranged at another end of the or each optical waveguide;
- a light source optically coupled with the or each first splitter-coupler; and
- a photodetector optically coupled with the or each second splitter-coupler.

In various embodiments, the system comprises:
- an acoustic-optic transducer configured for transducing an acoustic signal into an optical signal, preferably by converting the acoustic signal into a mechanical signal and subsequently converting the mechanical signal into the optical signal.

In various embodiments, wherein the at least one optical waveguide is arranged in a square spiral pattern, a round spiral pattern, or a serpentine pattern; or wherein the at least one optical waveguide is arranged in an intersecting pattern adapted to allow sensing over the entire vicinity of the mechanical process.

In various embodiments, said vicinity is characterized by a distance of at most 20 mm, preferably at most 15 mm, more preferably at most 10 mm, measured from a location where the mechanical process occurs or is expected to occur to a closest section of the at least one optical waveguide.

In various embodiments, the system comprises a counting module configured for counting each detected discrete acoustic event.

In various embodiments, the system is suitable for monitoring germination of seeds; the system comprising:
- at least one seed arranged in an environment for germination; and
   wherein the at least one optical waveguide is arranged in a vicinity of the at least one seed;
   wherein the at least one optical waveguide is optically coupled to at least one optical interrogator;
   wherein the at least one optical interrogator is configured for sensing the at least one optical waveguide, to detect a discrete acoustic event when at least one shell of the at least one seed ruptures; and
   wherein the at least one optical interrogator is configured for, if it is detected that the at least one shell of the at least seed has ruptured and has produced a discrete acoustic event, notifying the monitoring system of germination of the at least one seed.

In various embodiments, the environment for germination comprises a germination tray, and wherein the at least one optical waveguide is produced in a bottom of the germination tray by etching and/or lasering.

In various embodiments, the environment for germination comprises a germination tray, and wherein the at least one optical waveguide comprises an optical fiber attached on an inner surface of the germination tray, the inner surface being arranged to support the at least one seed.

In various embodiments, the at least one optical fiber is attached on the inner surface of the germination tray by gluing, moulding, clamping and/or taping.

In various embodiments, said vicinity is characterized by a distance of at most 20 mm, preferably at most 15 mm, more preferably at most 10 mm, measured from a seed of the at least one seed to a closest section of the at least one optical waveguide.

In various embodiments, the system comprises:
- an acoustic insulation configured to acoustically shield the environment for germination from an outside environment.

In various embodiments, the system comprises:
- a computational device configured for analysing the discrete acoustic event produced by the at least one shell of the at least seed rupturing, in order to classify said discrete acoustic event into one of said different types of plant seeds.

It will be understood that considerations and advantages applicable to any one of the embodiments according to the present disclosure, e.g. to a particular method embodiment, may be applicable to other embodiments according to the present disclosure, e.g. to a system embodiment, *mutatis mutandis.*

### BRIEF DESCRIPTION OF THE DRAWINGS

The above-described embodiments are presented merely to illustrate the invention and are not meant to limit the invention. The invention will be more fully understood with the help of the appended drawings, in which:
Figure 1 schematically illustrates a first embodiment of a system according to the present disclosure; and
Figure 2 schematically illustrates a second embodiment of a system according to the present disclosure.

### DETAILED DESCRIPTION

As indicated above, various embodiments according to the present disclosure can be applicable to many application domains, including, but not limited to:
- Rain/hail meter;
- Sand/grain/sugar measuring;
- Any other application domain where small acoustic 'pops' can be detected, and optionally counted.

In a fiber optic acoustic measurement, the fiber itself can act as an acoustic sensor. The fiber is distributed over an area, in this case the area where the seeds are located. the seeds can practically lay on top of this fiber (or in between). The acoustic detection area is thus the entire platform of the seed germination area, but also only limited to that area.

It is therefore preferably to provide acoustic insulation from an outside environment.

Various embodiments according to the present disclosure do not explicitly detect where in the area the seed has germinated, but mainly whether the seed has germinated.

It is possible to have a large amount of seeds in the area and then count the number of germinations over time.

Intrinsically, the acoustic response of a fiber is not high. There are different approaches to achieve reliable acoustic measurement:
- FBG (Fiber Bragg Grating) strain measurement, which is a local measurement, using a very high resolution interrogator.
- Implementing an OTDR (Optical Time Domain Reflectometry) method, called DAS, which has >1 m spatial resolution.
- Measurement sensitivity can be increased by using Fiber optic acoustic transducers (which are a type of mechanical constructions to help transform acoustic signals into optic signals).
- Measurement sensitivity can also be increased by using interferometry.

For the FBG-based measurement approach, a membrane is useful to translate the acoustics to strain on the FBG. Acoustic waves can be amplified by a stiffer tensioned surface such as a carbon fiber membrane. Direct attachment of the fiber containing an FBG sensor can allow transmission of acoustic waves to the sensor which will create a strain variation in the FBG leading to a measurable signal. Any transducer typically used for transferring or amplifying acoustic waves can supposedly be used for this purpose. Instead of an FBG sensor, the same signal can be received by a piezoelectric crystal sensor, with an adequate Signal to Noise Ratio (SNR).

The fiber membrane could also be a:
- a solgel glass-based waveguide structure; or
- another silica-based platform, optionally with integrated MMI and even LS/PDs or directly coupled towards the tray.

Fiber optic can be installed directly into the germination tray; the plastic or glass does not affect the water, seeds, or the germination process. It is chemically inert and electrically safe. There is no worry about corrosion of the sensors.

The fiber optic acoustic sensor can be embedded in extreme close proximity of the seeds.

In some embodiments, the sensing area can be disk, can be a square layout, can be sectioned (multiple detecting areas), or it can be other 2D shapes in general.

There are several advantages to using interferometry:
- Relatively cheap components.
- Laser can be shared over multiple sensors.
- Relative simple sensor algorithm (no modulation technique required).
- Highly sensitivity over the length of the fiber (which is exactly what is needed: high precision, low accuracy).

For interferometry-based measurements, no mechanical transducer is necessary, since the precision of the measurement is significantly higher.

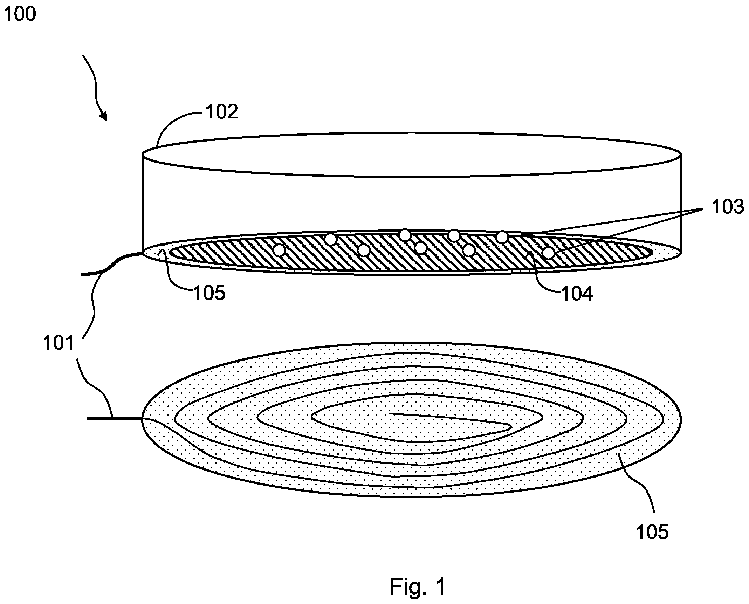

Figure 1 schematically illustrates a first embodiment 100 of a system according to the present disclosure. The system 100 is suitable for monitoring discrete acoustic events. The system 100 comprises:
- at least one optical waveguide 101 arranged in a vicinity 102 of a mechanical process understood to produce a discrete acoustic sound - in this example, a germination tray 102, wherein seeds 104 are arranged in or on a preferably water-absorbent material;
- at least one optical interrogator (not shown) optically coupled to the at least one optical waveguide 101;

wherein the at least one optical interrogator is configured for sensing the at least one optical waveguide 101, to detect when a discrete acoustic event is produced; and
wherein the at least one optical interrogator is configured for, if it is detected that a discrete acoustic event is produced, notifying a monitoring system (not shown) of the discrete acoustic event.

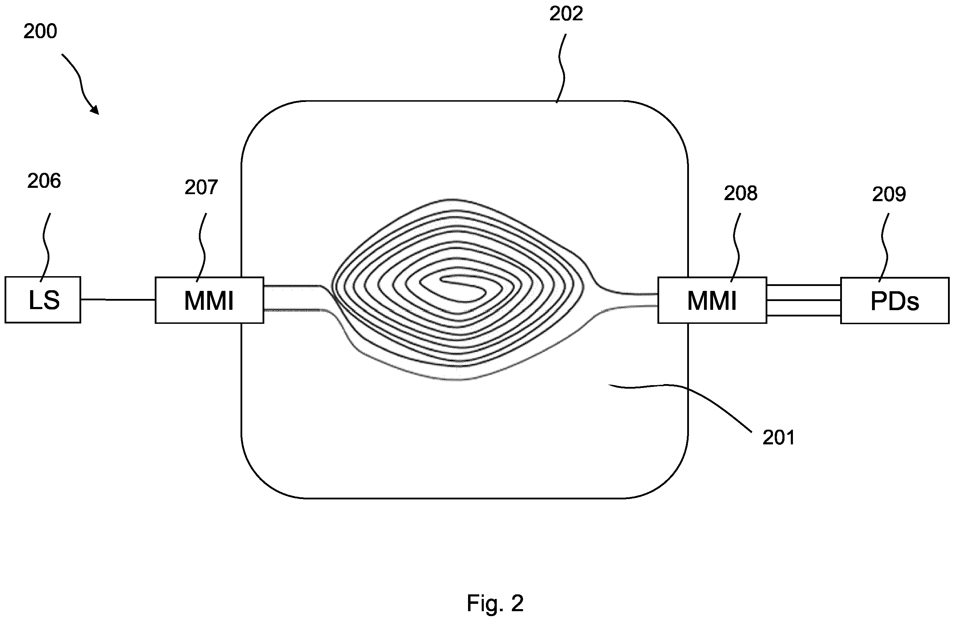

Figure 2 schematically illustrates a second embodiment 200 of a system according to the present disclosure. The system 200 also comprises:
- at least one optical waveguide 201 arranged in a vicinity 202 of a mechanical process understood to produce a discrete acoustic sound - in this example, a germination tray 202, similar to 201;
- at least one optical interrogator 209 optically coupled to the at least one optical waveguide 201 - in this example, a set of photodiodes and corresponding measurement hardware and software is used, in conjunction with a light source 206 and two MMls 207, 208;

wherein the at least one optical interrogator 209 is configured for sensing the at least one optical waveguide 201, to detect when a discrete acoustic event is produced; and
wherein the at least one optical interrogator 209 is configured for, if it is detected that a discrete acoustic event is produced, notifying a monitoring system (not shown) of the discrete acoustic event.

## Claims

1. A method for monitoring discrete acoustic events; the method comprising:
- arranging at least one optical waveguide in a vicinity of a mechanical process understood to produce a discrete acoustic sound;
- optically coupling the at least one optical waveguide to at least one optical interrogator;
- sensing the at least one optical waveguide using the at least one optical interrogator to detect when a discrete acoustic event is produced; and
- if it is detected that a discrete acoustic event is produced, notifying a monitoring system of the discrete acoustic event.

2. The method of any preceding claim, comprising:
- arranging a first splitter-coupler at one end of the or each optical waveguide and a second splitter-coupler at another end of the or each optical waveguide;
- optically coupling the or each first splitter-coupler with a light source; and
- optically coupling the or each second splitter-coupler with a photodetector.

3. The method of any preceding claim, comprising:
- arranging an acoustic-optic transducer configured for transducing an acoustic signal into an optical signal, preferably by converting the acoustic signal into a mechanical signal and subsequently converting the mechanical signal into the optical signal.

4. The method of any preceding claim, comprising counting each detected discrete acoustic event.

5. The method of any preceding claim, for monitoring germination of seeds; the method comprising:
- obtaining at least one seed arranged in an environment for germination;
- arranging the at least one optical waveguide in a vicinity of the at least one seed;
- optically coupling the at least one optical waveguide to at least one optical interrogator;
- sensing the at least one optical waveguide using the at least one optical interrogator to detect a discrete acoustic event when at least one shell of the at least one seed ruptures; and
- if it is detected that the at least one shell of the at least seed has ruptured and has produced a discrete acoustic event, notifying the monitoring system of germination of the at least one seed.

6. The method of any preceding claim, comprising:
- arranging an acoustic insulation to acoustically shield the environment for germination from an outside environment.

7. The method of any preceding claim, comprising:
- analysing the discrete acoustic event produced by the at least one shell of the at least seed rupturing, in order to classify said discrete acoustic event into one of said different types of plant seeds.

8. A computer program comprising instructions which, when the computer program is executed by a computer, cause the computer to carry out at least one of the steps of the method of any preceding claim.

9. A system for monitoring discrete acoustic events; the system comprising:
- at least one optical waveguide arranged in a vicinity of a mechanical process understood to produce a discrete acoustic sound;
- at least one optical interrogator optically coupled to the at least one optical waveguide;
wherein the at least one optical interrogator is configured for sensing the at least one optical waveguide, to detect when a discrete acoustic event is produced; and
wherein the at least one optical interrogator is configured for, if it is detected that a discrete acoustic event is produced, notifying a monitoring system of the discrete acoustic event.

10. The system of claim 9, comprising:
- a first splitter-coupler arranged at one end of the or each optical waveguide;
- a second splitter-coupler arranged at another end of the or each optical waveguide;
- a light source optically coupled with the or each first splitter-coupler; and
- a photodetector optically coupled with the or each second splitter-coupler.

11. The system of any one of claims 9-10, comprising:
- an acoustic-optic transducer configured for transducing an acoustic signal into an optical signal, preferably by converting the acoustic signal into a mechanical signal and subsequently converting the mechanical signal into the optical signal.

12. The system of any one of claims 9-11, wherein the at least one optical waveguide is arranged in a square spiral pattern, a round spiral pattern, or a serpentine pattern; or wherein the at least one optical waveguide is arranged in an intersecting pattern adapted to allow sensing over the entire vicinity of the mechanical process.

13. The system of any one of claims 9-12, for monitoring germination of seeds; the system comprising:
- at least one seed arranged in an environment for germination; and
wherein the at least one optical waveguide is arranged in a vicinity of the at least one seed;
wherein the at least one optical waveguide is optically coupled to at least one optical interrogator;
wherein the at least one optical interrogator is configured for sensing the at least one optical waveguide, to detect a discrete acoustic event when at least one shell of the at least one seed ruptures; and
wherein the at least one optical interrogator is configured for, if it is detected that the at least one shell of the at least seed has ruptured and has produced a discrete acoustic event, notifying the monitoring system of germination of the at least one seed.

14. The system of any one of claims 9-13, wherein the environment for germination comprises a germination tray, and wherein the at least one optical waveguide is produced in a bottom of the germination tray by etching and/or lasering and/or, wherein the environment for germination comprises a germination tray, and wherein the at least one optical waveguide comprises an optical fiber attached on an inner surface of the germination tray, the inner surface being arranged to support the at least one seed.

15. The system of any one of claims 9-14, comprising:
- an acoustic insulation configured to acoustically shield the environment for germination from an outside environment.

16. The system of any one of claims 9-15, comprising:
- a computational device configured for analysing the discrete acoustic event produced by the at least one shell of the at least seed rupturing, in order to classify said discrete acoustic event into one of said different types of plant seeds.
